# EUROPEAN PATENT APPLICATION

(11) **EP 3 632 537 A1**
(43) Date of publication of application: **08.04.2020**
(21) Application number: 18805591.7
(22) Date of filing: 25.05.2018
(51) Int. Cl.: B01J 23/63, B01D 53/94, B01J 35/04, B01J 37/02, F01N 3/10

(54) **EXHAUST GAS PURIFICATION CATALYST DEVICE**

(30) Priority: 25.05.2017 JP 2017103680
(71) Applicant: Cataler Corporation, Shizuoka 437-1492 (JP)
(72) Inventor: ONOZUKA, Takashi, Kakegawa-shi Shizuoka 437-1492 (JP); TAKI, Kenichi, Kakegawa-shi Shizuoka 437-1492 (JP); KAWAI, Masaaki, Kakegawa-shi Shizuoka 437-1492 (JP)
(74) Representative: Krauns, Christian
(86) International application number: PCT/JP2018/020244
(87) International publication number: WO 2018/216817

(57) **Abstract**

An exhaust gas purification catalyst device 10 which comprises: a lower layer 1 which contains metal oxide particles MO, and Pd and Pt supported by the metal oxide particles MO; and an upper layer 2 which contains zirconia-containing metal oxide particles ZrO, and Rh supported by the zirconia-containing metal oxide particles ZrO. This exhaust gas purification catalyst device 10 is configured such that: the lower layer 1 comprises a lower layer first stage part If that is on the exhaust gas upstream side, and a lower layer second stage part 1r that is on the exhaust gas downstream side; the lower layer first stage part 1f contains 1.8 g/L or more of Pd and 0.05 g/L or more of Pt; the lower layer second stage part 1r contains 0.10 g/L or more of Pd, while containing no Pt or 0.10 g/L or less of Pt; the amount of the zirconia-containing metal oxide particles ZrO in the upper layer 2 is from 60 g/L to 140 g/L (inclusive); and the amount of Ce in the upper layer 2 in terms of CeO₂ is 7g/L or less.

## Description

### FIELD

The present invention pertains to an exhaust gas purification catalyst device.

### BACKGROUND

The exhaust gas from an internal combustion engine of an automobile engine is passed through an exhaust gas purification catalyst, and after being purified, is released into the atmosphere. In order to achieve excellent catalytic function in the exhaust gas purification catalyst, the catalyst layers are sometimes set as multiple layers, wherein the upper and lower layers have different functions.

For example, Patent Literature 1 describes an exhaust gas purification catalyst comprising a substrate provided with at least one through-hole through which exhaust gas flows, and a catalyst layer supported by a wall surface of the through-hole, the catalyst layer comprising a lower layer facing the wall surface, and an upper layer facing the wall surfaces via the lower layer, the lower layer comprising a first part containing a first platinum group element and a first oxygen storage material, and a second part provided downstream of the first part, the second part containing a second platinum group element and a second oxygen storage material, the upper layer comprising a third platinum group element and a heat-resistant carrier, wherein the first and second oxygen storage materials are each independently oxides containing at least one of cerium and zirconium, and the percentage of cerium constituting the first oxygen storage material is higher than the percentage of cerium constituting the second oxygen storage material. The first platinum group element and the second platinum group element may be platinum and/or palladium, and the second platinum group element may be rhodium.

Conventionally, the catalyst layer in an exhaust gas purification catalyst such as the above was formed on a substrate which itself did not have an exhaust gas purification function, such as, for example, a honeycomb substrate made of cordierite. However, in recent years, exhaust gas purification catalysts in which precious metals are supported on substrates composed of metal oxide particles have been proposed (Patent Literature 2).

### [CITATION LIST]

### [PATENT LITERATURE]

[Patent Literature 1] JP 2010-227798
[Patent Literature 2] JP 2015-85241

### SUMMARY

### [TECHNICAL PROBLEM]

In recent years, restrictions on fuel consumption have been becoming stricter for automobile engines, and in order to achieve low fuel consumption, a lean frequency of an air-fuel ratio has been increased. Essentially, the air-fuel ratio restrictions are shifting to leaner values, and idling stops and fuel cuts are becoming more common. As a result, the concentration of oxygen in exhaust gas is increasing, changing an environment to one that worsens the efficacy of reduction purification of NOₓ by exhaust gas purification catalysts.

The present invention was created out of consideration of the above circumstances, with the object of providing an exhaust gas purification catalyst device with excellent oxidation purification performance for HC and CO, and high NO_{X} purification performance even in a lean atmosphere.

### [SOLUTION TO PROBLEM]

The present invention is as follows.
<1> An exhaust gas purification catalyst device having a lower layer comprising metal oxide particles, and Pd and Pt supported on the metal oxide particles, and an upper layer comprising zirconia-containing metal oxide particles and Rh supported on the zirconia-containing metal oxide particles, wherein:
   the lower layer comprises a lower layer front part on the exhaust gas upstream side and a lower layer rear part on the exhaust gas downstream side,
   the lower layer front part contains 1.8 g/L or more of Pd and 0.05 g/L or more of Pt,
   the lower layer rear part contains 0.10 g/L or more of Pd and does not contain Pt or contains 0.10 g/L or less of Pt,
   the amount of zirconia-containing metal oxide particles in the upper layer is 60 g/L or more and 140 g/L or less,
   and the amount of Ce in terms of CeO₂ in the upper layer is 7 g/L or less.
<2> The exhaust gas purification catalyst device of <1>, wherein the zirconia-containing metal oxide particles of the upper layer are ceria-zirconia composite oxide particles.
<3> The exhaust gas purification catalyst device of <1> or <2>, wherein the amount of Rh in the upper layer is 0.10 g/L or more.
<4> The exhaust gas purification catalyst device of any one of <1> to <3>, wherein the metal oxide particles of the lower layer front part comprise ceria-zirconia composite oxide particles.
<5> The exhaust gas purification catalyst device of <4>, wherein the Pd and Pt of the lower layer front part are each supported on the ceria-zirconia composite oxide particles.
<6> The exhaust gas purification catalyst device of any one of claims 1 to 5, wherein the metal oxide particles of the lower layer rear part comprise ceria-zirconia composite oxide particles.
<7> The exhaust gas purification catalyst device of <6>, wherein the Pd of the lower layer rear part is supported on the ceria-zirconia composition oxide particles.
<8> The exhaust gas purification catalyst device of any one of <1> to <7>, wherein the length of the lower layer front part is 10% or more and 50% or less of the total of the length of the lower layer front part and the length of the lower layer rear part.
<9> The exhaust gas purification catalyst device of any one of <1> to <8>, wherein the lower layer is a coating layer on a substrate, and the upper layer is a coating layer on the lower layer.
<10> The exhaust gas purification catalyst device of any one of <1> to <8>, wherein the lower layer constitutes a portion of a substrate, and the upper layer is a coating layer on the substrate.

### [ADVANTAGEOUS EFFECTS OF INVENTION]

The exhaust gas purification catalyst device of the present invention has excellent oxidation purification performance for HC and CO, and high NOₓ purification performance even in a lean atmosphere. Therefore, the exhaust gas purification catalyst device of the present invention is suitable for use in the exhaust system of engines with recent low fuel consumption restrictions.

### BRIEF DESCRIPTION OF DRAWINGS

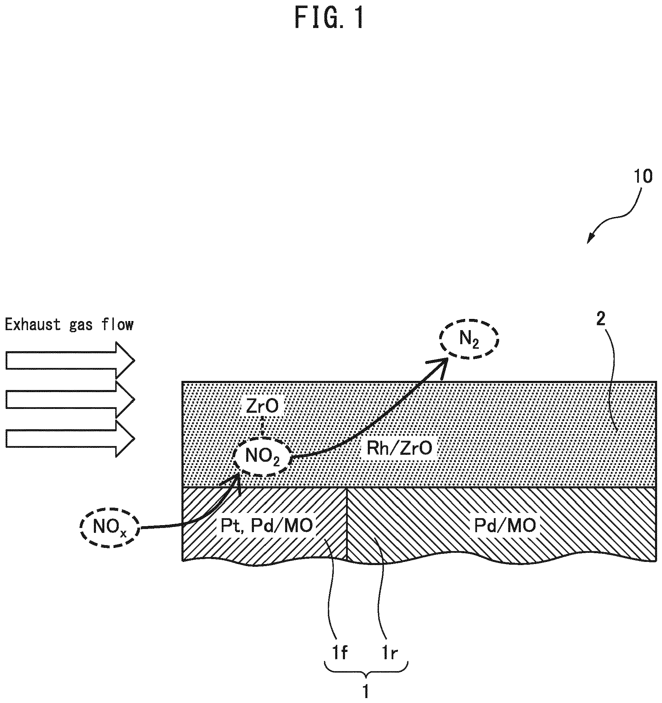

FIG. 1 is a pattern diagram depicting the concepts of the structure and mechanism of action of the exhaust gas purification catalyst device of the present invention.

### DESCRIPTION OF EMBODIMENTS

The present invention relates to an exhaust gas purification catalyst device having a lower layer comprising metal oxide particles, and Pd and Pt supported on the metal oxide particles, and an upper layer comprising zirconia-containing metal oxide particles and Rh supported on the zirconia-containing metal oxide particles, wherein:
the lower layer comprises a lower layer front part on the upstream side of the exhaust gas flow and a lower layer rear part on the downstream side of the exhaust gas flow,
the lower layer front part contains 1.8 g/L or more of Pd and 0.10 g/L or more of Pt,
the lower layer rear part contains 0.10 g/L or more of Pd and does not contain Pt or contains 0.10 g/L or less of Pt,
the amount of zirconia-containing metal oxide particles in the upper layer is 60 g/L or more and 140 g/L or less,
and the amount of Ce in terms of CeO₂ in the upper layer is 7 g/L or less.

FIG. 1 is a pattern diagram depicting the concepts of a typical structure and mechanism of action of the exhaust gas purification device of the present invention.

The exhaust gas purification catalyst device of FIG. 1 has a lower layer 1 and an upper layer 2. The lower layer 1 comprises metal oxide particles MO, and Pd and Pt supported on the metal oxide particles MO. The upper layer 2 comprises zirconia-containing metal oxide particles and Rh supported on the zirconia-containing metal oxide particles.

The lower layer 1 comprises a front part If on the exhaust gas upstream side and a rear part 1r on the exhaust gas downstream side. The lower layer front part If comprises a pre-determined amount of Pd and Pt. However, the lower layer rear part 1r comprises a pre-determined amount of Pd, but does not comprise Pt in a significant amount and preferably does not comprise Pt in any amount.

The upper layer 2 comprises a pre-determined amount of zirconia-containing metal oxide particles. The upper layer 2 may comprise metal oxide particles containing Ce, but the amount of Ce in terms of CeO₂ is limited to not more than a certain amount.

The exhaust gas purification catalyst device of the present invention having the configuration above has excellent oxidation purification performance for HC and CO, and has high NOₓ purification performance even in lean atmospheres. The present inventors suggest that the following type of mechanism of action is the reason.

The concentration of oxygen in the exhaust gas is higher in a lean atmosphere than in a rich atmosphere, such that the efficiency of direct reduction of NOₓ to N₂ by a reduction catalyst Rh is poor in a lean atmosphere. Therefore, reduction purification from NO₂ to N₂ by reduction catalyst Rh is carried out after NOₓ is first oxidized by oxidation catalysts Pt and Pd. The reduction activity from NO₂ to N₂ is higher than the reduction activity from NOₓ other than NO₂ (such as NO) to N₂, and thus, this type of detour is more advantageous from the perspective of purification efficiency of NOₓ and energy consumed.

In the exhaust gas purification catalyst device 10 of FIG. 1, NOₓ is oxidized by Pt and Pd mainly in the lower layer front part If, generating NO₂. The NO₂ thus generated is reduced by Rh in the upper layer 2 to N₂, which is released into the atmosphere. If the upper layer 2 comprises zirconia-containing metal oxide particles ZrO, the NO₂ generated in the lower layer front part initially adsorbs onto the ZrO for temporary storage, and then is supplied to a reduction reaction by Rh, improving the efficiency of NOₓ purification. Therefore, the upper layer 2 of the exhaust gas purification catalyst device 10 must contain a predetermined amount of ZrO.

In the prior art, Rh is commonly supported on an OSC material, which has an oxygen storage-release capacity. In such cases, the Rh supported on the OSC material can be advantageously used to carry out reduction of NO₂.

However, in a lean atmosphere, the oxygen concentration is already high, and it is therefore considered that, if there is too large an amount of an OSC material, the oxygen storage-release capacity hinders the reduction of NO₂ by Rh. Thus, in the upper layer of the exhaust gas purification catalyst device of the present invention, the amount of metal oxide particles containing Ce, which can act as an OSC material, is restricted. However, if the amount of Ce in the upper layer 2 is not more than a certain amount, the extent of hindrance of the reduction reaction is low, and the advantageous effects of using an OSC material can be achieved, and therefore, the upper layer 2 can contain Ce-containing metal oxide particles within this range. In this case, the Ce-containing metal oxide particles in the upper layer 2 can contain cerium in the form of ceria-zirconia composite oxide particles.

The Pt and Pd in the lower layer 1 each have oxidation catalyst ability, oxidize NOₓ to NO₂ to support and promote the reduction purification by Rh, and contribute to the oxidation purification of HC and CO. Comparing Pt and Pd, Pt has higher oxidation catalyst activity, and thus, using Pt is advantageous from the perspective of oxidation catalyst activity. However, Pt promotes the oxygen releasing capacity of the OSC material, such that it is likely that excessive Pt would hinder the reduction reaction by Rh. In the exhaust gas purification catalyst device 10, to ensure that high HC and CO oxidation activity of Pt is exhibited and NO₂ reduction activity of Rh is not hindered, the amount of Pt is restricted, and Pt is provided primarily in the lower layer front part If in which the frequency of contact with NOₓ in the exhaust gas is high. Pd is provided in both the lower layer front part If and the lower layer rear part 1r, enabling the improvement of oxidation catalyst activity in the lower layer front part If, and supplementing the limitation of amount of Pt used in the lower layer rear part 1r, achieving the oxidation purification ability for HC and CO.

The exhaust gas purification catalyst device of the present invention has, due to the configuration based on the above technological considerations, excellent oxidation purification performance for HC and CO, and high NOₓ purification performance even in a lean atmosphere.

### <<Exhaust gas purification catalyst device>>

The preferable embodiments (hereinafter referred to as "the present embodiment") of the exhaust gas purification catalyst device of the present invention are described below as examples.

The exhaust gas purification catalyst device of the present embodiment comprises a lower layer and an upper layer.

### <Lower layer>

The lower layer of the exhaust gas purification catalyst device of the present embodiment comprises metal oxide particles, and Pd and Pt supported on the metal oxide particles. The lower layer comprises a lower layer front part on the exhaust gas upstream side and a lower layer rear part on the exhaust gas downstream side.

### (Lower layer front part)

The lower layer front part comprises metal oxide particles, and Pd and Pt supported on the metal oxide particles.

The metal oxide particles of the lower layer front part may be one or more selected from alumina, silica alumina, zeolite, titania, silica, ceria, zirconia, rare earth element oxides, and a composite oxide of two or more thereof. The metal oxide particles of the lower layer front part may include alumina particles, alumina particles and ceria-zirconia composite oxide particles, or alumina particles, ceria-zirconia composite oxide particles and rare earth element oxide particles.

The amount of alumina particles in the lower layer front part, relative to the total mass of metal oxide particles in the lower layer front part, may be, for example, 10 mass% or more, 20 mass% or more, or 30 mass% or more, and, for example, 100 mass% or less, 80 mass% or less, 60 mass% or less, or 40 mass% or less.

The percent of ceria-zirconia composite oxide particles in the lower layer front part, relative to the total mass of metal oxide particles in the lower layer front part, may be, for example, 30 mass% or more, 40 mass% or more, or 50 mass% or more, and, for example, 80 mass% or less, 70 mass% or less, or 60 mass% or less.

The percent of rare earth element oxide particles in the lower layer front part, relative to the total mass of metal oxide particles in the lower layer front part, may be, for example, 1 mass% or more, 3 mass% or more, or 5 mass% or more, and, for example, 20 mass% or less, 15 mass% or less, or 10 mass% or less.

The amount (total amount) of metal oxide particles in the lower layer front part, relative to the total mass of metal oxide particles per L volume of substrate, may be, for example, 80 g/L or more, 90 g/L or more, or 100 g/L or more, and, for example, 200 g/L or less, 180 g/L or less, or 150 g/L or less.

In the lower layer front part, it is preferable to set the amount of Ce in terms of CeO₂ to not exceed a certain amount, from the perspective of not hindering the reduction purification activity of Rh in the upper layer. Given this perspective, the amount of Ce in the lower layer front part, relative to the mass in terms of CeO₂ per L volume of substrate, may be 50 g/L or less, 45 g/L or less, 40 g/L or less, 35 g/L or less, or 30 g/L or less.

The particle size of metal oxide particles in the lower layer front part of the exhaust gas purification catalyst device of the present embodiment, as a median size measured according to a laser diffraction scattering method, may be, for example, 1 µm or more, 2 µm or more, or 3 µm or more, and, for example, 15 µm or less, 14 µm or less, or 13 µm or less.

The lower layer front part comprises, as precious metals having catalytic activity, Pd and Pt supported on metal oxide particles.

The amount of Pd in the lower layer front part, as the metal equivalent mass per L volume of substrate, may be 1.8 g/L or more, for example, 2.0 g/L or more, 2.5 g/L or more, 3.0 g/L or more, or 3.5 g/L or more, and, for example, 8.0 g/L or less, 7.0 g/L or less, 6.0 g/L or less, 5.5 g/L or less, 5.0 g/L or less, 4.5 g/L or less, or 4.0 g/L or less.

The amount of Pt in the lower layer front part, as the metal equivalent mass per L volume of substrate, may be 0.05 g/L or more, for example, 0.10 g/L or more, or 0.15 g/L or more, and, for example, 3.0 g/L or less, 2.5 g/L or less, 2.0 g/L or less, 1.5 g/L or less, or 1.0 g/L or less.

The Pd and Pt of the lower layer front part are each supported on metal oxide particles contained in the lower layer front part. In a preferred embodiment, the Pd and Pt of the lower layer front part are each supported by alumina particles or ceria-zirconia composite oxide particles or both, or supported by alumina particles.

### (Lower layer rear part)

The lower layer rear part comprises metal oxide particles. The lower layer rear part comprises, as a catalyst precious metal, Pd supported on the metal oxide particles. However, the lower layer rear part either does not comprise Pt as a precious metal or is restricted to comprising Pt in an amount not more than a predetermined amount.

The metal oxide particles of the lower layer rear part may be appropriately selected from among the types indicated above as the metal oxide particles of the lower layer front part. The metal oxide particles of the lower layer rear part preferably comprise ceria-zirconia composite oxide particles, alumina particles and ceria-zirconia composite oxygen particles, or alumina particles, ceria-zirconia composite oxygen particles, and rare earth element oxide particles.

The amount and particle size of each type of metal oxide particles in the lower layer rear part may each be adjusted to within the same range as in the lower layer front part.

The amount of Pd in the lower layer rear part, as the metal equivalent mass per L volume of substrate, may be, for example, 0.10 g/L or more, 0.12 g/L or more, 0.14 g/L or more, 0.16 g/L or more, or 0.18 g/L or more, and, for example, 0.40 g/L or less, 0.35 g/L or less, 0.32 g/L or less, 0.30 g/L or less, 0.28 g/L or less, 0.26 g/L or less, or 0.24 g/L or less.

The lower layer rear part either does not comprise Pt, or comprises Pt in an amount, as the metal equivalent mass per L volume of substrate, which may be 0.10 g/L or less, 0.08 g/L or less, 0.06 g/L or less, 0.04 g/L or less, 0.02 g/L or less, or 0.01 g/L or less.

The Pd and, if present, Pt of the lower layer rear part are each supported on metal oxide particles contained in the lower layer rear part. In a preferable embodiment, the Pd and Pt of the lower layer rear part are each supported by particles of at least one of alumina, ceria-zirconia composite oxide, and rare earth element oxide. In particular, the Pd of the lower layer rear part is supported on ceria-zirconia composite oxide particles.

### (Lengths of lower layer front part and lower layer rear part)

The ratio of lengths of the lower layer front part and lower layer rear part may be arbitrarily selected. However, the length of the lower layer front part is preferably either the same length as the lower layer rear part or shorter than the lower layer rear part, from the perspective of minimizing the hindrance of the reduction catalyst mechanism of action of Rh in the upper layer caused by Pt, which is necessarily contained in the lower layer front part. Given this perspective, the length of the lower layer front part, relative to the total of the length of the lower layer front part and the length of the lower layer rear part, can be 50% or less, and may be 45% or less, 40% or less, 35% or less, or 30% or less. However, from the perspective of effectively exhibiting the reduction catalyst function of Rh after oxidizing NOₓ to NO₂, the length of the lower layer front part, which necessarily comprises Pt, relative to the total of the length of the lower layer front part and the length of the lower layer rear part, can be 10% or more, and may be 15% or more, 20% or more, 25% or more, or 30% or more.

The total length of the lower layer front part and the lower layer rear part, may be, for example, 60% or more, 70% or more, 80% or more, 90% or more, or even 100% of the length of the substrate.

### <Upper layer>

The upper layer of the exhaust gas purification catalyst device of the present embodiment comprises zirconia-containing metal oxide particles and Rh supported on the zirconia-containing metal oxide particles.

From the perspective of sufficient adsorption of NO₂ generated from NOₓ by the oxidation catalyst action of Pt and Pd in the lower layer to effectively utilize the N₂ reduction catalyst function of Rh, the amount of zirconia-containing metal oxide particles in the upper layer, as the mass of metal oxide particles per L volume of substrate, may be 60 g/L or more, 70 g/L or more, 80 g/L or more, 90 g/L or more, or 100 g/L or more. However, from the perspective of not making the upper layer too thick and ensuring an intralayer flow of the exhaust gas, the amount of zirconia-containing metal oxide particles in the upper layer per L volume of substrate may be 140 g/L or less, 130 g/L or less, 120 g/L or less, 110 g/L or less, or 100 g/L or less.

The zirconia-containing metal oxide particles may be ceria-zirconia composite metal oxide particles which further comprise Ce atoms. However, from the perspective of limiting hindrance of the reduction catalyst efficacy of Rh caused by the oxygen storage-release function of ceria, the amount of ceria in the upper layer must be limited. Given this perspective, the amount of Ce in terms of CeO₂ in the upper layer may be 7 g/L or less, 6 g/L or less, or 5 g/L or less, as an equivalent mass of CeO₂ per L volume of substrate.

However, from the perspective of using ceria-zirconia composite metal oxide particles as the zirconia-containing metal oxide particles to limit the deterioration of Rh due to the oxygen storage-release capacity of ceria, it is preferable for the upper layer to comprise not less than a certain amount of Ce. Given this perspective, the amount of Ce in terms of CeO₂ in the upper layer, as a CeO₂ equivalent mass per L volume of substrate, may be 3 g/L or more, 4 g/L or more, or 5 g/L or more.

The metal oxide particles in the upper layer may be zirconia-containing metal oxide particles, or preferably, only ceria-zirconia composite metal oxide particles, which may be used in conjunction with other metal oxide particles.

The other metal oxide particles in the upper layer may be one or more selected from, for example, alumina, silica alumina, zeolite, titania, silica, rare earth element oxides, and a composite oxide of two or more thereof.

The metal oxide particles of the upper layer may be zirconia-containing metal oxide particles, or preferably alumina particles used in conjunction with, preferably, ceria-zirconia composition metal oxide particles. In the latter case, the percentage of alumina used, relative to the total mass of the metal oxide particles in the upper layer, may be, for example, 10 mass% or more, 15 mass% or more, 20 mass% or more, or 25 mass% or more, and for example, 40 mass% or less, 35 mass% or less, or 30 mass% or less.

The amount (total amount) of metal oxide particles in the upper layer, as a total mass of the metal oxide particles per L volume of substrate, may be, for example, 80 g/L or more, 90 g/L or more, or 100 g/L or more, and, for example, 200 g/L or less, 180 g/L or less, or 150 g/L or less.

The particle size of the metal oxide particles in the upper layer of the exhaust gas purification catalyst device of the present embodiments, as a median size measured according to a laser diffraction scattering method, may be, for example, 1 µm or more, 2 µm or more, or 3 µm or more, and 15 µm or less, 14 µm or less, or 13 µm or less.

The upper layer comprises, as a precious metal having catalytic activity, Rh supported on zirconia-containing metal oxide particles. From the perspective of ensuring effective expression of NO₂ reduction purification ability, the amount of Rh in the upper layer, as a metal equivalent mass per L volume of substrate, may be, for example, 0.10 g/L or more, 0.20 g/L or more, 0.30 g/L or more, 0.40 g/L or more, or 0.50 g/L or more. Additionally, out of consideration for the balance of oxidation ability and reduction ability of the catalyst overall, as a metal equivalent mass per L volume of substrate, the amount of Rh in the upper layer may be 1.5 g/L or less, or 1.0 g/L or less.

The length of the upper layer may be, for example, 60% or more, 70% or more, 80% or more, 90% or more, or 100% of the length of the substrate.

### <Configuration of the exhaust gas purification catalyst device>

The exhaust gas purification catalyst device of the present embodiment may comprise a substrate, wherein a lower layer is a coating layer on the substrate, and an upper layer is a coating layer on the lower layer (first exhaust gas purification catalyst device); or may comprise a substrate, wherein a lower layer constitutes a part of the substrate, and an upper layer is a coating layer on the substrate (second exhaust gas purification catalyst device).

### <Substrate>

The substrate of the first exhaust gas purification catalyst of the present embodiment can be a material commonly used as the substrate of exhaust gas purification catalyst devices. Examples of such a material include cordierite, SiC, stainless steel, and monolith honeycomb substrates composed of metal oxide particles. The volume of the substrate may be made to be, for example, about 1 L.

In the second exhaust gas purification catalyst device, the lower layer constituting a part of the substrate refers to, for example, a case in which Pd and Pt are supported close to the surface of at least the cell side of the monolith honeycomb substrate composed of metal oxide particles. Such a substrate may be divided into a front part on the exhaust gas upstream side and a rear part on the exhaust gas downstream side, each of which can fulfill the respective requirements for the lower layer front part and lower layer rear part of the present embodiments. The volume of the substrate may be made to be, for example, about 1 L.

### «Manufacturing methods for exhaust gas purification catalyst devices»

The manufacturing methods for the following exhaust gas purification catalyst devices of the present embodiments:
a first exhaust gas purification catalyst device, which has a substrate, wherein the lower layer is a coating layer on the substrate, and the upper layer is a coating layer on the lower layer, and
a second exhaust gas purification catalyst device, wherein the lower layer constitutes a part of the substrate and the upper layer is a coating layer on the substrate,
are separately described below in that order.

### <Manufacturing method for the first exhaust gas purification catalyst device>

The first exhaust gas purification catalyst device of the present embodiments may be manufactured according to, for example, the following method.

A manufacturing method for the exhaust gas purification catalyst device comprises:
forming a lower layer front part film by applying a lower layer front part-forming slurry comprising metal oxide particles and Pd and Pt supported on metal oxide particles to a cell surface on a substrate front part of the exhaust gas upstream side of the substrate;
forming a lower layer rear part film by applying a lower layer rear part-forming slurry comprising metal oxide particles and Pd supported on metal oxide particles to a cell surface on a substrate rear part of the exhaust gas downstream side of the substrate;
forming an upper layer film by applying an upper layer-forming slurry comprising zirconia-containing metal oxide particles and Rh supported on zirconia-containing metal oxide particles on the surfaces of the lower layer front part film and the lower layer rear part film; and
firing the lower layer front part film, the lower layer rear part film, and the upper layer film; wherein
the formation of the lower layer front part film and the formation of the lower layer rear part film may be carried out in any order.

The substrate may be appropriately selected from the materials indicated above in regards to the substrate of the first exhaust gas purification catalyst device.

The lower layer front part-forming slurry comprises metal oxide particles and Pd supported on metal oxide particles. The type of metal oxide particles in the lower layer front part-forming slurry, the amounts of Pt and Pd, and the type of metal oxide particles on which Pd and Pt are supported may each be appropriately selected in accordance with the desired composition of the lower layer front part of the exhaust gas purification catalyst device.

In addition to the above components, the lower layer front part-forming slurry may comprise, for example, a binder or a viscosity modifier. The binder may be, for example, a permanent binder such as boehmite, or a temporary binder such as an organic polymer. The viscosity modifier may be, for example, a water-soluble polymer, or specifically, hydroxyethyl cellulose.

The dispersion medium of the lower layer front part-forming slurry is suitably water.

The above lower layer front part-forming slurry is applied to the portion of the substrate intended to form the lower layer front part. The application may be carried out according to a publicly known method, such as a pushing method, a suction method, or an immersion method.

Thus, the lower layer front part film may be formed on the cell surface of the substrate front part on the exhaust gas upstream side of the substrate.

The lower layer rear part-forming slurry comprises metal oxide particles, and Pd supported on metal oxide particles. The lower layer rear part-forming slurry may further comprise Pt supported on metal oxide particles. The type of metal oxide particles in the lower layer rear part-forming slurry, the amounts of Pd and, if present, Pt, and the type of metal oxide particles on which the aforementioned metal catalysts are supported may each be appropriately selected in accordance with the desired composition of the lower layer rear part of the exhaust gas purification catalyst device.

In addition to the above components, the lower layer rear part-forming slurry may comprise a binder or a viscosity modifier, similar to those of the lower layer front part-forming slurry.

The dispersion medium of the lower layer rear part-forming slurry is suitably water.

The above lower layer rear part-forming slurry is applied to the portion of the substrate intended to form the lower layer rear part. The application may be carried out according to a publicly known method, such as a pushing method, a suction method, or an immersion method.

Thus, the lower layer rear part film may be formed on the cell surface of the substrate rear part on the exhaust gas downstream side of the substrate. The forming of the lower layer front part film and the forming of the lower layer rear part film may be carried out in any order. Hereinafter, the lower layer front part film and the lower layer rear part film are collectively referred to as the "lower layer film".

The upper layer-forming slurry comprises zirconia-containing metal oxide particles, and Rh supported on zirconia-containing metal oxide particles. The type of metal oxide particles in the upper layer-forming slurry, the amount of Rh, and the type of metal oxide particles on which Rh is supported may each be appropriately selected in accordance with the desired composition of the upper layer of the exhaust gas purification catalyst device.

In addition to the above components, the upper laying-forming slurry may comprise a binder or a viscosity modifier, similar to those of the lower layer front part-forming slurry.

The dispersion medium of the upper layer-forming slurry is suitably water.

The above upper layer-forming slurry is applied to the lower layer film formed on the substrate. The application may be carried out according to a publicly known method, such as a pushing method, a suction method, or an immersion method.

Thus, the upper layer film may be formed on the lower layer film on the substrate.

Next, the exhaust gas purification catalyst device is obtained by firing the upper layer film on the lower layer film formed on the substrate.

The firing can be carried out according to a method of heating to a temperature of, for example, 200 °C or more, 250 °C or more, 300 °C or more, 350 °C or more, 400 °C or more, or 450 °C or more, and, for example, 1,000 °C or less, 900 °C or less, 800 °C or less, 700 °C or less, or 600 °C or less for, for example, 15 minutes or more, 30 minutes or more, or 1 hour or more, and, for example, 10 hours or less, 8 hours or less, or 6 hours or less.

### <Manufacturing method for the second exhaust gas purification catalyst device>

The second exhaust gas purification catalyst on the present embodiment may be manufactured according to, for example, the following method.

A manufacturing method for the exhaust gas purification catalyst device comprises:
preparing a substrate composed of metal oxide particles;
forming a lower layer front part by supporting Pd and Pt on metal oxide particles of a cell surface of the substrate front part on the exhaust gas upstream side of the substrate;
forming the lower layer rear part by supporting at least Pd on metal oxide particles of a cell surface of the substrate rear part on the exhaust gas downstream side of the substrate;
forming an upper layer film by applying the upper layer-forming slurry which comprises zirconia-containing metal oxide particles and Rh supported on zirconia-containing metal oxide particles on a cell surface of the substrate after formation of the lower layer front part and the lower layer rear part; and
firing the upper layer film; wherein
the formation of the lower layer front part and the formation of the lower layer rear part may be carried out in any order.

The substrate composed of metal oxide particles can be obtained according to, for example, the method described in Patent Literature 2, using, as a starting material, the desired metal oxide particles included in the lower layer of the exhaust gas purification catalyst device.

Forming a lower layer front part by supporting Pd and Pt on metal oxide particles of a cell surface of the substrate front part on the exhaust gas upstream side of the substrate may be according to a method in which, for example, a Pd precursor and a Pt precursor are applied as, for example, an aqueous solution to a part of the substrate where the lower layer front part is to be formed, and thereafter, the lower layer front part film is fired. The Pd precursor and the Pt precursor may be, for example, any type of metal halide, nitrate, or sulfate. The concentrations of the Pd precursor and the Pt precursor in the aqueous solution may be appropriately determined in accordance with the desired amounts of these metal catalysts contained in the lower layer front part of the exhaust gas purification catalyst device. The application may be carried out according to a pushing method, a suction method, or an immersion method. A substrate comprising the lower layer front part may be formed by applying the metal precursor aqueous solution and then firing.

Forming the lower layer rear part by supporting Pd, or Pd and Pt on metal oxide particles of a cell surface of the substrate rear part on the exhaust gas downstream side of the substrate may according to a method in which, for example, a Pd precursor and a Pt precursor are applied as, for example, an aqueous solution to a part of the substrate where the lower layer front part is to be formed, and thereafter, the lower layer front part film is fired. The Pd precursor and the Pt precursor may be, for example, any type of metal halide, nitrate, or sulfate. The type of Pd precursor or Pt precursor may be the same as in the case of forming the lower layer front part. The concentrations of the Pd precursor and the Pt precursor in the aqueous solution may be appropriately determined in accordance with the desired amounts of these metal catalysts contained in the lower layer rear part of the exhaust gas purification catalyst device. The application may be carried out according to a pushing method, a suction method, or an immersion method. A substrate comprising the lower layer rear part may be formed by applying the metal precursor aqueous solution and then firing.

The formation of the lower layer front part and the formation of the lower layer rear part on the substrate may be carried out in any order.

Next, an upper layer film is formed by applying an upper layer-forming slurry comprising zirconia-containing metal oxide particles and Rh supported on zirconia-containing metal oxide particles on the cell surface of the substrate after formation of the lower layer front part and lower layer rear part. The formation of the upper layer film may be carried out in the same manner as the formation of the upper layer film on the first exhaust gas purification catalyst device.

The second exhaust gas purification catalyst device may be obtained by firing the upper layer film.

In the manufacturing method for the second exhaust gas purification catalyst device, the firing of the lower layer front part film, firing of the lower layer rear part film, and firing of the upper layer film may each be carried out independently, or two or more thereof may be carried out simultaneously.

### EXAMPLES

In the following Examples and Comparative Examples, the amount (g/L) of each component used in the preparation of the slurry is the amount (g/L - substrate) arrived at by dividing the mass (g) of each component in the obtained coating layer by L volume of monolith honeycomb substrate.

### <<Example 1>>

### (1) Formation of the lower layer rear part

50 g/L of alumina particles (average particle size 5 µm), 75 g/L of ceria-zirconia composite oxide particles (average particle size 5 µm, ceria content 40 mass%), 10 g/L of barium sulfate as an amount in terms of barium oxide, and 0.2 g/L of Pd nitrate as an amount in terms of Pd were added into water and thoroughly mixed, whereby a lower layer rear part-forming slurry (solid content 30 mass%) was prepared.

The aforementioned lower layer rear part-forming slurry was applied to the monolith honeycomb substrate having a volume of 1 L from the end of the exhaust gas downstream side to form a coating length 70% of the substrate length. Next, the coating was dried for 1 hour at 250 °C, and further fired for 1 hour at 500 °C, forming the lower layer rear part of the coating layer on the monolith honeycomb substrate.

### (2) Formation of the lower layer front part

50 g/L of alumina particles (average particle size 5 µm) were treated in an aqueous solution containing Pd nitrate and Pt nitrate, whereby alumina particles supporting 4 g/L of Pd and 0.2 g/L of Pt (Pd-Pt/Al₂O₃) were obtained. The total amount of the aforementioned Pd-Pt/Al₂O₃, 75 g/L of ceria-zirconia composite oxide particles (average particle size 5 µm, ceria content 40 mass%), and 10 g/L of barium sulfate as an amount in terms of barium oxide were added into water and thoroughly mixed, whereby a lower layer front part-forming slurry (solid content 30 mass%) was prepared.

The aforementioned lower layer front part-forming slurry was applied to the monolith honeycomb substrate on which the lower layer rear part was formed from the end of the exhaust gas upstream side to form a coating length 30% of the substrate length. Next, the coating was dried for 1 hour at 250 °C, and further fired for 1 hour at 500 °C, forming the lower layer front part of the coating layer on the monolith honeycomb substrate.

### (3) Formation of the upper layer

100 g/L of ceria-zirconia composite oxide particles (average particle size 5 µm, ceria content 5 mass%) were treated in an aqueous solution of Rh nitrate, whereby ceria-zirconia composite oxide particles supporting 0.5 g/L of Rh (Rh/CeO₂-ZrO₂) were obtained. The total amount of the aforementioned Rh/CeO₂-ZrO₂, and 49 g/L of alumina particles (average particle size 5 µm) were added into water and thoroughly mixed, whereby an upper layer-forming slurry (solid content 30 mass%) was prepared.

The aforementioned upper layer-forming slurry was applied to the monolith honeycomb substrate on which the lower layer rear part and lower layer front part were formed to form a coating length 100% of the substrate length. Next, the coating was dried for 1 hour at 250 °C, and further fired for 1 hour at 500 °C, forming the upper layer of the coating layer, whereby an exhaust gas purification catalyst device having a lower layer rear part, a lower layer front part, and an upper layer on a monolith honeycomb substrate was obtained.

### (4) Evaluation of exhaust gas purification efficacy

The above exhaust gas purification catalyst device was attached to a 2,000 cc gasoline engine, and a 20-hour endurance was evaluated at an average engine speed of 3,000 rpm and an exhaust gas temperature at the inlet to the catalyst device of 1,000 °C.

The emissions of non-methane hydrocarbons (NMHC) and nitrogen oxides (NOₓ) which are emitted from the exhaust pipe, i.e. tail pipe, were investigated by attaching the exhaust gas purification catalyst device which completed the above endurance test to a vehicle having a 700 cc gasoline engine and operating in JC08 Mode.

The results are shown in Table 1.

### <<Examples 2 to 7 and Comparative Examples 1 to 10>>

The amount of each component in the lower layer rear part-forming slurry, the lower layer front part-forming slurry, and the upper layer-forming slurry and the ceria content in the ceria-zirconia composite oxide particles are each respectively as shown in Table 1.
Each slurry was prepared in a manner similar to Example 1, and these were used to make exhaust gas purification catalysts for evaluation. In Example 4, zirconia particles were used instead of ceria-zirconia composite oxide particles.

**[Table 1]**

| | Lower layer | | | | Upper layer | | | | Emission | |
|---|---|---|---|---|---|---|---|---|---|---|
| | First stage part | | Second stage part | | Amount of Rh [g/L] | Zirconia-containing oxide | | | | |
| | Amount of Pd [g/L] | Amount of Pt [g/L] | Amount of Pd [g/L] | Amount of Pt [g/L] | | Amount of oxides [g/L] | Percent of CeO₂ [%] | Amount of CeO₂ [g/L] | NMHC [mg/km] | NO_{X} [mg/km] |
| Example 1 | 4 | 0.2 | 0.2 | 0 | 0.5 | 100 | 5 | 5 | 0.0083 | 0.0071 |
| Example 2 | 4 | 0.2 | 0.2 | 0 | 0.5 | 80 | 5 | 4 | 0.0081 | 0.0075 |
| Example 3 | 4 | 0.2 | 0.2 | 0 | 0.5 | 120 | 5 | 6 | 0.0086 | 0.0080 |
| Example 4 | 4 | 0.2 | 0.2 | 0 | 0.5 | 100 | 0 | 0 | 0.0084 | 0.0082 |
| Example 5 | 4.15 | 0.05 | 0.2 | 0 | 0.5 | 100 | 5 | 5 | 0.0081 | 0.0074 |
| Example 6 | 2.2 | 2 | 0.2 | 0 | 0.5 | 100 | 5 | 5 | 0.0086 | 0.0082 |
| Example 7 | 3.2 | 1 | 0.2 | 0 | 0.5 | 100 | 5 | 5 | 0.0085 | 0.0065 |
| Comparative Example 1 | 4.2 | 0 | 0.2 | 0 | 0.5 | 100 | 5 | 5 | 0.0099 | 0.0100 |
| Comparative Example 2 | 4 | 0.2 | 0.2 | 0.2 | 0.5 | 100 | 5 | 5 | 0.0085 | 0.0091 |
| Comparative Example 3 | 4 | 0 | 0.2 | 0.2 | 0.5 | 100 | 5 | 5 | 0.0105 | 0.0110 |
| Comparative Example 4 | 1.7 | 2.5 | 0.2 | 0 | 0.5 | 100 | 5 | 5 | 0.0083 | 0.0120 |
| Comparative Example 5 | 4 | 0.2 | 0.2 | 0 | 0.5 | 40 | 5 | 2 | 0.0087 | 0.0120 |
| Comparative Example 6 | 4 | 0.2 | 0.2 | 0 | 0.5 | 40 | 20 | 8 | 0.0098 | 0.0112 |
| Comparative Example 7 | 4 | 0.2 | 0.2 | 0 | 0.5 | 100 | 20 | 20 | 0.0084 | 0.0100 |
| Comparative Example 8 | 4 | 0.2 | 0.2 | 0 | 0.5 | 100 | 40 | 40 | 0.0085 | 0.0161 |
| Comparative Example 9 | 4 | 0.2 | 0.2 | 0 | 0.5 | 160 | 5 | 8 | 0.0090 | 0.0150 |
| Comparative Example 10 | 4.2 | 0 | 0.2 | 0 | 0.5 | 40 | 20 | 8 | 0.0097 | 0.0130 |

For the exhaust gas purification catalyst device of Comparative Example 1, in which the lower layer front part comprised 1.8 g/L or more of Pd but did not comprise Pt, the emission was high for both NMHC and NOₓ. For the exhaust gas purification catalyst device of Comparative Example 2, in which the amount of Pt in the lower layer rear part was too large, the emission of NOₓ was high. For Comparative Example 3, in which the amount of Pt in the lower layer rear part was too large and Pd was not used in the lower layer front part, the emission of NMHC was higher than Comparative Example 2. For the exhaust gas purification catalyst of Comparative Example 4, in which the lower layer front part comprised 0.10 g/L or more of Pt and did not comprise 1.8 g/L or more of Pd, the emission of NMHC was comparatively low, while the emission of NOₓ was extremely high.

For the exhaust gas purification catalyst device of Comparative Example 5, in which the amount of zirconia-containing metal oxides in the upper layer was too low, the emission of NOₓ was high. For the exhaust gas purification catalyst device of Comparative Example 6, in which the amount of zirconia-containing metal oxides in the upper layer was too low, and the amount of ceria in the upper layer was too large, the emission was high for NOₓ, and even higher for NMHC.

For the exhaust gas purification catalyst devices of Comparative Example 7 and Comparative Example 8, in which the amount of ceria in the upper layer was too large, the emissions of NOₓ were high for both. For the exhaust gas purification catalyst device of Comparative Example 9, in which the amount of ceria in the upper layer was too large and the amount of zirconia-containing metal oxides in the upper layer was too large, the emission was high for NOₓ, and even higher for NMHC.

For the exhaust gas purification catalyst device of Comparative Example 10 in which Pt was not used in the lower layer front part and the amount of ceria in the upper layer was too large, the emission was high for both NMHC and NOₓ.

In contrast, the emission of the exhaust gas purification catalyst device of Example 1, in which the lower layer front part comprised both 1.8 g/L or more of Pd and 0.10 g/L or more of Pt, demonstrated excellent values for both NMHC and NOₓ.

### REFERENCE SIGNS LIST

- 1: lower layer
- 1f: lower layer front part
- 1r: lower layer rear part
- 2: upper layer
- 10: exhaust gas purification catalyst device

## Claims

1. An exhaust gas purification catalyst device having a lower layer comprising metal oxide particles and Pd and Pt supported on the metal oxide particles, and an upper layer comprising zirconia-containing metal oxide particles and Rh supported on the zirconia-containing metal oxide particles, wherein:
the lower layer comprises a lower layer front part on the exhaust gas upstream side and a lower layer rear part on the exhaust gas downstream side,
the lower layer front part contains 1.8 g/L or more of Pd and 0.05 g/L or more of Pt,
the lower layer rear part contains 0.10 g/L or more of Pd and does not contain Pt or contains 0.10 g/L or less of Pt,
the amount of zirconia-containing metal oxide particles in the upper layer is 60 g/L or more and 140 g/L or less,
and the amount of Ce in terms of CeO₂ in the upper layer is 7 g/L or less.

2. The exhaust gas purification catalyst device of claim 1 wherein the zirconia-containing metal oxide particles of the upper layer are ceria-zirconia composite metal oxide particles.

3. The exhaust gas purification catalyst device of claim 1 or 2, wherein the amount of Rh in the upper layer is 0.10 g/L or more.

4. The exhaust gas purification catalyst device of any one of claims 1 to 3, wherein the metal oxide particles of the lower layer front part comprise alumina particles.

5. The exhaust gas purification catalyst device of claim 4, wherein the Pd and Pt of the lower layer front part are each supported on the alumina particles.

6. The exhaust gas purification catalyst device of any one of claims 1 to 5, wherein the metal oxide particles of the lower layer rear part comprise ceria-zirconia composite oxide particles.

7. The exhaust gas purification catalyst device of claim 6, wherein the Pd of the lower layer rear part is supported on the ceria-zirconia composition oxide particles.

8. The exhaust gas purification catalyst device of any one of claims 1 to 7, wherein the length of the lower layer front part is 10% or more and 50% or less of the total of the length of the lower layer front part and the length of the lower layer rear part.

9. The exhaust gas purification catalyst device of any one of claims 1 to 8, wherein the lower layer is a coating layer on a substrate, and the upper layer is a coating layer on the lower layer.

10. The exhaust gas purification catalyst device of any one of claims 1 to 8, wherein the lower layer constitutes a portion of a substrate, and the upper layer is a coating layer on the substrate.
